# EUROPÄISCHE PATENTSCHRIFT

(11) **EP 4 348 212 B1**
(45) Veröffentlichungstag und Bekanntmachung des Hinweises auf die Patenterteilung: **15.04.2026**
(21) Anmeldenummer: 22730448.2
(22) Anmeldetag: 24.05.2022
(51) Int. Cl.: G01M 13/025, G01L 3/14

(54) **PRÜFSTAND FÜR EINEN ANTRIEBSSTRANG EINES KRAFTFAHRZEUGS**
TEST STAND FOR THE POWERTRAIN OF A MOTOR VEHICLE
BANC D'ESSAI POUR GROUPE MOTOPROPULSEUR D'UN VÉHICULE À MOTEUR

(30) Priorität: 27.05.2021 DE 102021205369
(43) Veröffentlichungstag der Anmeldung: 10.04.2024
(73) Patentinhaber: ZF Friedrichshafen AG, 88046 Friedrichshafen (DE)
(72) Erfinder: HELL, Christian, 94107 Untergriesbach (DE); DOLLINGER, Thomas, 94036 Passau (DE)
(74) Vertreter: ZF Friedrichshafen AG
(86) Internationale Anmeldenummer: PCT/EP2022/064046
(87) Internationale Veröffentlichungsnummer: WO 2022/248467

(56) Entgegenhaltungen:
- DE-A1- 10 328 461
- US-A1- 2020 284 695

## Beschreibung

Die Erfindung betrifft einen Prüfstand für einen Antriebsstrang eines Kraftfahrzeugs gemäß dem Oberbegriff von Anspruch 1.

Getriebeprüfstände bzw. Antriebsstrangprüfstände zum Prüfen von Kraftfahrzeuggetrieben bzw. von vollständigen Kraftfahrzeugantriebssträngen sind aus dem Stand der Technik bekannt. Derartige Prüfstände werden üblicherweise zur Qualitätskontrolle verwendet, um Funktionsstörungen in Antriebssträngen frühzeitig durch eine Reihe von Belastungstests zu erkennen. Typische Funktionsstörungen entstehen z.B. durch spielbehaftete Bauteile, wie z. B. Zahnräder, Synchronringe, Synchronkörper, Lamellenkupplungsscheiben und Wellen, die ausgelenkt und zu Schwingungen angeregt werden können. Im Rahmen einer derartigen Qualitätskontrolle werden in der Regel auch das Akustikverhalten und die Schaltqualität geprüft. Darüber hinaus finden derartige Prüfstände aber auch in der Entwicklung und stetigen Verbesserung von Kraftfahrzeugantriebssträngen Verwendung.

In diesem Zusammenhang beschreibt die DE 43 28 537 C2 einen Getriebeprüfstand mit einem ersten, als Antriebsmotor dienenden Servomotor und einem zweiten, als Bremsmotor dienenden Servomotor. Der Antriebsmotor ist über eine Kupplung mit der Antriebswelle eines zu prüfenden Kraftfahrzeuggetriebes verbunden und wird u.a. hinsichtlich seiner Drehzahl über einen PC gesteuert, so dass beliebige Drehzahlverläufe simulierbar sind. Der Bremsmotor ist über eine weitere Kupplung mit einer Abtriebswelle des zu prüfenden Kraftfahrzeuggetriebes verbunden. Auch die Drehzahl des Bremsmotors wird über den PC gesteuert. Bei den vom PC simulierten Drehzahlverläufen handelt es sich um in realen Fahrversuchen gemessene Drehzahlverläufe. Somit kann das Kraftfahrzeuggetriebe gemäß der DE 43 28 537 C2 vor dem Einbau in ein Kraftfahrzeug geprüft werden.

Die DE 103 28 461 A1 offenbart einen Fahrzeugprüfstand mit einer Belastungsmaschine für jedes antreibbare Rad eines Kraftfahrzeugs. Die Belastungsmaschinen sind dabei direkt, beispielsweise über Radbolzen, oder indirekt, beispielsweise über einen Riementrieb, mit den Felgen der Kraftfahrzeugräder verbunden, so dass die Belastungsmaschinen den Antriebsstrang sowohl antreiben als auch bremsen können. Der Fahrzeugprüfstand der DE 103 28 461 A1 umfasst weiterhin eine Rahmenkonstruktion, über welche das Kraftfahrzeug und die Belastungsmaschinen angehoben und zueinander ausgerichtet werden können. Während des Prüfvorgangs wird das Kraftfahrzeug vollständig über die Rahmenkonstruktion gehalten, so dass die Fahrzeugräder keinen Bodenkontakt haben.

Aus der US 2020/284695 A1 ist eine Prüfkörpertestapparatur bekannt, die ein Fahrzeug oder einen Teil eines Fahrzeugs prüft. Die Prüfkörpertestapparatur weist eine Belastungsvorrichtung auf, deren Drehwelle mit einer Drehwelle des Prüflings verbunden ist, mit derselben Geschwindigkeit dreht und der Drehwelle des Prüflings einen Fahrwiderstand vermittelt. Die Prüfkörpertestapparatur weist weiterhin einen Speicher auf, der Reifendurchmesserdaten speichert, die eine Beziehung zwischen einem Fahrzustand des Prüflings und einem Reifendurchmesser angeben, sowie einen Laststeuerungsteil, der aus den Reifendurchmesserdaten einen Reifendurchmesser entsprechend einem Fahrzustand des Prüflings berechnet und die Belastungsvorrichtung unter Verwendung eines von dem berechneten Reifendurchmesser erhaltenen Fahrwiderstands steuert.

Die bekannten Kraftfahrzeugprüfstände sind jedoch insofern nachteilbehaftet, als dass diese, insbesondere wenn sie zur Prüfung eines bereits in das Kraftfahrzeug eingebauten Antriebsstrangs vorgesehen sind, eine vergleichsweise große Aufstellfläche benötigen und vor allem auf eine aufwändige und teure mechanische Tragekonstruktion angewiesen sind.

Es ist eine Aufgabe der vorliegenden Erfindung, einen verbesserten Prüfstand für einen Antriebsstrang eines Kraftfahrzeugs vorzuschlagen.

Diese Aufgabe wird erfindungsgemäß durch den Prüfstand für einen Antriebsstrang eines Kraftfahrzeugs gemäß Anspruch 1 gelöst. Vorteilhafte Ausgestaltungen ergeben sich aus den Unteransprüchen.

Die Erfindung betrifft einen Prüfstand für einen Antriebsstrang eines Kraftfahrzeugs, umfassend mindestens einen Belastungsmotor mit einem Motorgehäuse und einer Motorwelle, mindestens einen Drehmomentsensor und mindestens ein Abstellmodul, wobei die Motorwelle dazu ausgebildet ist, trieblich mit einer Nabe des Kraftfahrzeugs verbunden zu werden und wobei der Drehmomentsensor dazu ausgebildet ist, ein vom Motor erzeugtes Drehmoment zu erfassen. Der erfindungsgemäße Prüfstand zeichnet sich dadurch aus, dass der mindestens eine Drehmomentsensor derart am Motorgehäuse angeordnet ist, dass er eine Drehbewegung des Motorgehäuses gegenüber einem Untergrund rotatorisch blockiert und das Drehmoment über das Motorgehäuse am Untergrund abstützt.

Die Erfindung beschreibt also einen Prüfstand, der dazu geeignet ist, einen Antriebsstrang eines Kraftfahrzeugs zu prüfen. Bei dem Kraftfahrzeug kann es sich gleichermaßen um ein elektromotorisch angetriebenes Kraftfahrzeug handeln wie auch um ein konventionell angetriebenes Kraftfahrzeug.

Der Prüfstand umfasst dazu mindestens einen Belastungsmotor. Bei dem Belastungsmotor handelt es sich vorteilhaft um einen Elektromotor. Elektromotoren sind vergleichsweise kompaktbauend, haben insbesondere im Vergleich zu Verbrennungsmotoren ein breites Drehzahlspektrum und weisen vorteilhaft über einen weiten Drehzahlbereich das maximale Drehmoment auf. Erst bei Erreichen des sog. "Eckpunkts" im vergleichsweise hohen Drehzahlbereich nimmt das Drehmoment aufgrund der zunehmenden Feldschwächung indirekt proportional zur weiter zunehmenden Drehzahl ab.

Bevorzugt ist es vorgesehen, dass der mindestens eine Belastungsmotor als permanenterregter Synchronmotor ausgebildet ist. Besonders vorteilhaft umfasst der Synchronmotor eine vergleichsweise große Anzahl von magnetischen Polpaaren, beispielsweise zwölf oder mehr magnetische Polpaare. Derartige Synchronmotoren sind auch als sog. Synchro-Torque-Motoren bekannt. Daraus ergibt sich der Vorteil, dass der Belastungsmotor vergleichsweise kompakt und axial kurz ausgebildet sein kann, was in Folge auch zu einer Anordnung des Schwerpunkts des Belastungsmotors sehr dicht am Fahrwerk des Kraftfahrzeugs führt.

Vorteilhaft ist jedem Belastungsmotor ein eigener Inverter zugeordnet. Der Inverter ist beispielweise dreiphasig ausgebildet.

Der mindestens eine Belastungsmotor umfasst ein Motorgehäuse, welches den Belastungsmotor einhaust. Das Motorgehäuse ist beispielsweise zylinderförmig ausgebildet.

Das Motorgehäuse kann beispielsweise eine Wasserkühlung aufweisen.

Schließlich umfasst der mindestens eine Belastungsmotor auch eine Motorwelle, welche das vom Belastungsmotor erzeugte Drehmoment und die vom Belastungsmotor erzeugte Drehzahl bereitstellt. Die Motorwelle kann drehfest mit einer der Naben der Räder des Kraftfahrzeugs verbunden werden, so dass ein Drehmoment und eine Drehzahl von der Motorwelle in die Nabe eingeleitet werden können. Das Drehmoment und die Drehzahl stellen gemeinsam eine mechanische Leistung dar, mit welcher der zu prüfende Antriebsstrang belastet werden kann. Das Drehmoment und die Drehzahl stellen somit die im Rahmen der Prüfung erfolgende Belastung des Antriebsstrangs dar.

Unter einer trieblichen Verbindung wird im Sinne der Erfindung eine mechanische Verbindung zur Übertragung von mechanischer Leistung verstanden, wobei das Drehmoment und die Drehzahl im Rahmen der Übertragung vom Belastungsmotor zur Nabe gewandelt werden können. D.h. also, dass der Belastungsmotor beispielsweise eine erste Drehzahl und ein erstes Drehmoment bereitstellt, wobei die erste Drehzahl und das erste Drehmoment die erste Leistung darstellen. Im Rahmen der Übertragung der ersten Leistung kann das erste Drehmoment zum zweiten Drehmoment gewandelt werden und die erste Drehzahl zur zweiten Drehzahl gewandelt werden. Die erste Leistung bleibt durch die Übertragung jedoch unverändert. Durch die Definition, dass die Motorwelle trieblich mit der Nabe verbunden ist bzw. verbindbar ist, ist also nicht festgelegt, dass es eine unmittelbare mechanische Verbindung, insbesondere keine drehfeste Verbindung, zwischen der Motorwelle und der Nabe geben muss. Vielmehr kann die triebliche Verbindung auch ein Getriebe oder eine einzelne Übersetzungsstufen oder sonstige Zwischenelemente umfassen.

Weiterhin umfasst der Prüfstand mindestens einen Drehmomentsensor, wobei der Drehmomentsensor dazu ausgebildet ist, ein vom Belastungsmotor erzeugtes Drehmoment zu erfassen.

Der Drehmomentsensor umfasst bevorzugt ein oder mehrere kraftsensitive Elemente, insbesondere einen oder mehrere Dehnmessstreifen, welche zunächst eine am kraftsensitiven Element wirkende Kraft bzw. an den mehreren kraftsensitiven Elementen wirkenden Kräfte erfassen. Über die Geometrie des Drehmomentsensors kann dann aus der erfassten Kraft bzw. den erfassten Kräften das jeweils wirkende Drehmoment bestimmt werden.

Bevorzugt ist es vorgesehen, dass zusätzlich auch eine Drehzahl des Belastungsmotors erfasst wird, beispielsweise über dessen Ansteuerelektronik, insbesondere über dessen Inverter. Aus der bekannten Drehzahl und dem bekannten Drehmoment kann dann beispielsweise die Leistung bzw. die Belastung bestimmt werden.

Das Abstellmodul wird vorteilhaft anstelle eines Fahrzeugrads bzw. wie ein Fahrzeugrad an der Nabe des Kraftfahrzeugs montiert. Über das an der Nabe angeordnete Abstellmodull stützt sich das zu prüfende Kraftfahrzeug auf dem Untergrund ab Der Untergrund kann gegenüber dem Abstellmodul einen besonders hohen Reibwert aufweisen, um auch das Übertragen hoher Drehmomente vom Belastungsmotor auf das Abstellmodul zu ermöglichen.

Weiterhin kann es vorgesehen sein, dass das mindestens eine Abstellmodul kraftschlüssig oder formschlüssig mit dem Untergrund verbindbar ist. Beispielsweise kann die Haftung des Abstellmoduls auf dem Untergrund noch weiter erhöht werden, indem das Abstellmodul etwa mittels eines Spanngurts, dessen Enden fest mit dem Untergrund verbunden sind, über seine Lauffläche eingespannt wird. Um die Haftung des Abstellmoduls auf dem Untergrund nochmals weiter zu verbessern, kann das Abstellmodul weiterhin zum Beispiel mittels eines Bolzens, der im Untergrund angeordnet ist und radial von außen in das Abstellmodul eindringt, auf dem Untergrund angeordnet werden.

Bevorzugt ist es vorgesehen, dass das mindestens eine Abstellmodul einen radialen Außenteil und einen radialen Mittelteil aufweist, wobei der Mittelteil drehbar im Außenteil gehalten ist und wobei der Mittelteil dazu ausgebildet ist, drehfest mit einem axialen Ende des Motorgehäuses verbunden zu werden. Das mindestens eine Abstellmodul ist also zweiteilig ausgebildet, wobei der radiale Mittelteil des Abstellmoduls gegenüber dem radialen Außenteil des Abstellmoduls drehbar ist. Der Belastungsmotor wird dabei über sein Motorgehäuse am Mittelteil des Abstellmoduls gehalten, beispielsweise über eine Schraub- bzw. Flanschverbindung. Der radiale Außenteil ist also gegenüber dem Belastungsmotor verdrehbar.

In diesem Fall wird das Abstellmodul nicht wie ein Fahrzeugrad an der Nabe des Kraftfahrzeugs montiert, sondern bietet eine zentrale Öffnung, durch welche die Motorwelle des Belastungsmotors direkt mit der Nabe verbunden werden kann, beispielsweise über den Radflansch. Das bedeutet auch, dass das Abstellmodul in diesem Fall nur mittelbar über den Belastungsmotor mit der Nabe verbunden ist, da der Belastungsmotor über sein Motorgehäuse einerseits mit dem Mittelteil des Abstellmoduls verbunden ist und andererseits über seine Motorwelle mit der Nabe des Kraftfahrzeugs.

Alternativ bevorzugt kann das Abstellmodul neben dem radialen Außenteil und dem radialen Mittelteil weiterhin auch einen zentralen Innenteil aufweisen, welcher seinerseits drehbar im radialen Mittelteil gehalten ist. In diesem Fall kann das Abstellmodul über den zentralen Innenteil drehfest an der Nabe des Kraftfahrzeugs montiert werden. Ebenso kann dann auch die Motorwelle des Belastungsmotors drehfest am zentralen Innenteil angeordnet werden, so dass die Motorwelle und die Nabe des Kraftfahrzeugs über den zentralen Innenteil miteinander in Triebverbindung stehen.

Ganz besonders bevorzugt ist es vorgesehen, dass ein Verdrehen des Mittelteils gegen den Außenteil blockierbar ist. Das Blockieren kann beispielweise durch Verschieben von dazu vorgesehenen Bolzen bzw. Schlitten oder durch Positionieren eines Klemmelements erfolgen, so dass eine Relativbewegung des Außenteils zum Mittelteil blockiert wird. Daraus ergibt sich der Vorteil, dass sich das Kraftfahrzeug sogar aus eigener Kraft bewegen kann und entsprechend einfach für die Prüfung positioniert und ausgerichtet werden kann. Beispielsweise kann an jedem zu prüfenden Rad ein entsprechend blockierbares Abstellmodul montiert werden und anschließend kann das Kraftfahrzeug innerhalb des Prüfgeländes, beispielsweise in einer großräumigen Halle, vom Ort der Abstellmodul-Montage an den Ort der Prüfung fahren.

Erfindungsgemäß ist es nun vorgesehen, dass der mindestens eine Drehmomentsensor derart am Motorgehäuse angeordnet ist, dass eine Drehbewegung des Motorgehäuses gegenüber einem Untergrund blockiert und das Drehmoment über das Motorgehäuse am Untergrund abstützt. In anderen Worten stützt sich der Belastungsmotor also über den Drehmomentsensor derart am Untergrund ab, dass er eine Drehzahl und ein Drehmoment in die Nabe des Kraftfahrzeugs einleiten kann. Der Drehmomentsensor ist dementsprechend sowohl am Motorgehäuse als auch am Untergrund befestigbar. Somit kann die vom Belastungsmotor erzeugte Belastung in Kraftflussrichtung in die Nabe des Kraftfahrzeugs und damit in den Antriebsstrang eingeleitet werden und entgegen der Kraftflussrichtung kann der Belastungsmotor die Belastung über das Motorgehäuse und den Drehmomentsensor am Untergrund abstützen.

Da der Belastungsmotor und der mit dem Belastungsmotor über sein Motorgehäuse drehfest verbundene radiale Mittelteil des Abstellmoduls während des Prüfvorgangs nicht drehen, ergibt sich der Vorteil, dass das Kraftfahrzeug während eines Prüfvorgangs ortsfest auf dem Untergrund stehen bleibt, da während des Prüfvorgangs ausschließlich die Motorwelle und die Nabe des Kraftfahrzeugs rotierbaren.

Weiterhin ergibt sich der Vorteil, dass der Drehmomentsensor während des Prüfvorgangs nicht mit einer Drehbewegung beaufschlagt wird, welche andernfalls durch aus der Drehung resultierende Fliehkräfte die Messwerte des Sensors ungünstig beeinflussen könnte.

Da der mindestens eine Drehmomentsensor sich zudem vorteilhaft nicht im Drehmomentfluss vom Belastungsmotor zu Nabe befindet, kann die mechanische Verbindung vom Belastungsmotor zur Nabe vergleichsweise sehr kurz ausgebildet sein, wodurch sich auch die Steifigkeit der Verbindung verbessert.

Die Erfindung beschreibt somit einen sehr kompakten Prüfstand zum Prüfen eines Antriebsstrangs eines Kraftfahrzeugs, bei dem der Belastungsmotor ohne eine Zwischenwelle direkt mit einer Nabe des Kraftfahrzeugs verbunden werden kann. Daraus ergibt sich auch der Vorteil, dass der benötigte Prüfraum vergleichsweise sehr viel kleiner als im Stand der Technik üblich ausfällt und insbesondere kein sperriges und teures Prüfgestell bzw. keine entsprechende Rahmenkonstruktion erforderlich sind, um das Kraftfahrzeug und die Belastungsmotoren zu halten und zueinander auszurichten. Insbesondere ist auch keine aufwändige und zeitraubende Ausrichtung bzw. Justage des Antriebsstrangs bzw. des Kraftfahrzeugs zum Prüfstand mehr erforderlich. Ein nochmals weiterer wesentlicher Vorteil der Erfindung ist darin zu sehen, dass der Prüfvorgang mittels des erfindungsgemäßen Prüfstands insbesondere auch die Fahrwerkseigenschaften des zu prüfenden Kraftfahrzeugs weitestgehend unbeeinflusst lässt, da das zu prüfende Kraftfahrzeug während des Prüfvorgangs ausschließlich über das eigene Fahrwerk auf dem Untergrund abgestützt ist. Somit können vorteilhaft auch fahrwerkespezifische Eigenschaften wie das Einfederungsverhalten, Lenkverhalten und ähnliche Eigenschaften sehr realitätsnah geprüft werden.

Bevorzugt ist es vorgesehen, dass der Untergrund eine Vorrichtung zum Halten des mindestens einen Belastungsmotors ist, welche den mindestens einen Belastungsmotor beispielsweise an seinen axialen Enden im Bereich der Motorwelle hält, so dass eine Drehbarkeit des Motorgehäuses gewährleistet bleibt.

Erfindungsgemäßist es weiterhin vorgesehen, dass der mindestens eine Drehmomentsensor in einer Strebe angeordnet ist, wobei die Strebe über ein erstes Gelenkauge am Motorgehäuse befestigt ist und über ein zweites Gelenkauge am Untergrund befestigt ist. Bei der Strebe handelt es sich bevorzugt um eine metallische Strebe, die hinsichtlich ihrer mechanischen Belastbarkeit an die Leistungsfähigkeit des Belastungsmotors angepasst ist, so dass sie das vom Belastungsmotor aufgebrachte Drehmoment sicher abstützen kann, sei es auf Druck oder auf Zug. Die Verwendung von Gelenkaugen zur Anbindung der Strebe an das Motorgehäuse und den Untergrund führt zu dem Vorteil, dass keine Querkräfte die Messung des Drehmoments nachteilig beeinflussen können. Indem der Drehmomentsensor vorteilhaft im Kraftfluss der Strebe angeordnet ist, kann er somit das vollständige Drehmoment zuverlässig erfassen.

Gemäß einer weiteren bevorzugten Ausführungsform der Erfindung ist es vorgesehen, dass an zwei lateralen Seiten des Motorgehäuses jeweils ein Drehmomentsensor angeordnet ist. Somit wird jeder einzelne der beiden Drehmomentsensoren nur mit dem halben Drehmoment beaufschlagt, was zu einer besseren Messgenauigkeit führen kann.

Bei einer Anordnung der Drehmomentsensoren an den lateralen Seiten des Gehäuses wird vorteilhaft berücksichtigt, dass das von den Drehmomentsensoren erfasste Drehmoment auf einer ersten lateralen Seite des Motorgehäuses als "Schubmoment" und auf der zweiten lateralen Seite als "Zugmoment" erfasst wird. Bevorzugt werden die Beträge der erfasst "Schubmomente" und der erfassten "Zugmomente" addiert, um das Gesamt-Drehmoment zu erhalten, welches dem vom Belastungsmotor bereitgestellten Drehmoment insgesamt entspricht.

Gemäß einer weiteren bevorzugten Ausführungsform der Erfindung ist es vorgesehen, dass der Prüfstand weiterhin einen Luftreifen umfasst, welcher auf einem radialen Außenumfang des mindestens einen Abstellmoduls angeordnet ist. In diesem Fall ergibt sich ein Abstützverhalten des Abstellmoduls auf dem Untergrund, welches weitestgehend dem Abstützverhalten eines im normalen Fahrbetrieb des Kraftfahrzeugs auftretenden Abstützverhalten entspricht. Dadurch kann die Qualität der Prüfung verbessert werden, da das Verhalten des Antriebsstrangs in der Prüfungssituation noch näher am Verhalten des Antriebsstrangs im regulären Fahrbetrieb des Kraftfahrzeugs ist.

Bevorzugt ist auf dem Abstellmodul ein Luftreifen angeordnet, der für den Straßenbetrieb des Kraftfahrzeugs zugelassen ist.

Gemäß einer alternativ bevorzugten Ausführungsform der Erfindung ist es vorgesehen, dass der Prüfstand weiterhin eine Gummibeschichtung umfasst, welchr auf einem radialen Außenumfang des mindestens einen Abstellmoduls angeordnet ist. Die Gummibeschichtung ermöglicht ebenfalls eine vergleichsweise realitätsnahe Abstützung des Abstellmoduls auf dem Untergrund, erfordert dabei allerdings im Gegensatz zum Luftreifen keine gesonderte Auswahl und Montage eines jeweils geeigneten Luftreifens auf dem Abstellmodul. Stattdessen kann die Gummibeschichtung fest und dauerhaft auf dem Abstellmodul angeordnet sein.

Gemäß einer weiteren bevorzugten Ausführungsform der Erfindung ist es vorgesehen, dass der Prüfstand weiterhin mindestens einen Abstützstempel umfasst, wobei der Abstützstempel in drei Raumrichtungen verstellbar und/oder um eine Achse verdrehbar ist und wobei der Abstützstempel dazu ausgebildet ist, das Abstellmodul abzustützen und den Untergrund darstellt. Durch entsprechende Betätigung des Abstützstempels beispielsweise entlang einer Hochachse lassen sich somit etwa Bodenunebenheiten während einer Fahrt des Kraftfahrzeugs simulieren. Ebenso lassen sich auch nahezu alle anderen Einflüsse eines möglichen Untergrunds über den Abstützstempel simulieren, insbesondere auch in Verbindung mit Lenkbewegungen von lenkbaren Rädern des Kraftfahrzeugs. Da der Abstützstempel in diesem Fall auch den Untergrund darstellt, mit dem der mindestens eine Drehmomentsensor vorteilhaft verbunden ist, weist er bevorzugt eine entsprechende Anbindungsmöglichkeit auf, insbesondere für ein Gelenkauge.

Nachfolgend wird die Erfindung anhand von in den Figuren dargestellten Ausführungsformen beispielhaft erläutert.

Es zeigen:
- Fig. 1: beispielhaft und schematisch einen im Stand der Technik bekannten Prüfstand zum Prüfen eines Antriebsstrangs eines Kraftfahrzeugs sowie das zu prüfende Kraftfahrzeug,
- Fig. 2: beispielhaft und schematisch eine mögliche Ausführungsform eines erfindungsgemäßen Prüfstands für einen Antriebsstrang eines Kraftfahrzeugs sowie das zu prüfende Kraftfahrzeug,
- Fig. 3: beispielhaft und schematisch eine mögliche Ausführungsform eines erfindungsgemäßen Prüfstands im Detail,
- Fig. 4: beispielhaft und schematisch eine weitere mögliche Ausführungsform eines erfindungsgemäßen Prüfstands und
- Fig. 5: beispielhaft und schematisch eine nochmals weitere mögliche Ausführungsform eines erfindungsgemäßen Prüfstands

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

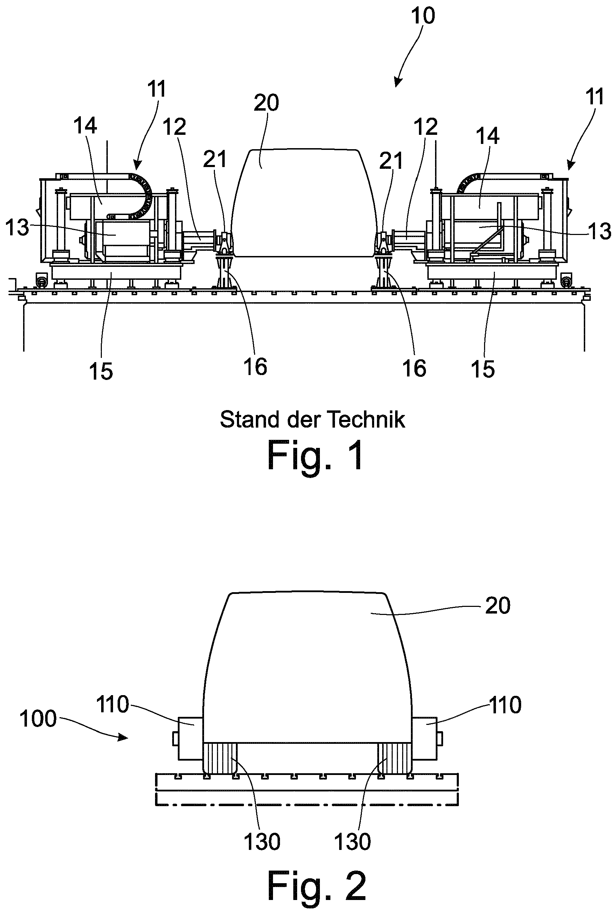

Fig. 1 zeigt beispielhaft und schematisch einen im Stand der Technik bekannten Prüfstand 10 zum Prüfen eines Antriebsstrangs eines Kraftfahrzeugs 20 sowie das zu prüfende Kraftfahrzeug 20. Der Antriebsstrang ist dabei bereits vollständig in das Kraftfahrzeug 20 eingebaut. Der bekannte Prüfstand 10 umfasst zwei Belastungseinheiten 11, die jeweils über Verbindungswellen 12 mit Naben 21 von antreibbaren Rädern des Kraftfahrzeugs 20 verbunden sind. Es sind insbesondere für allradgetriebene Fahrzeuge jedoch auch gattungsgleiche Prüfstande 10 vier Belastungseinheiten 11 bekannt. Die Belastungseinheiten 11 umfassen ihrerseits jeweils einen am elektrischen Antriebsmotor 13 angeordneten Klemmenkasten 14 zur Aufnahme der Kabel, die den elektrischen Antriebsmotor 13 mit elektrischer Energie versorgen. Die Antriebsmotoren 13 sind jeweils auf einem Rahmengestell 15 angeordnet, wobei das Rahmengestell 15 seitenverstellbar ist, um an die Spurbreite unterschiedlicher Fahrzeugtypen angepasst werden zu können. Das Kraftfahrzeug 20 wird üblicherweise mittels einer Hebevorrichtung, beispielsweise eines Krans, auf die Abstützelemente 16 gehoben und dort abgestellt. Die Abstützelemente 16 weisen jeweils eine Aufnahmelagerung zur Befestigung an den Naben der Fahrzeugräder auf. Der Aufbau und damit der Raumbedarf des bekannten Prüfstands 10 sind vergleichsweise groß. Da an den Naben 21 des Kraftfahrzeugs 20 keine Räder montiert sind, kann das Kraftfahrzeug 20 zudem weder aus eigener Kraft noch durch Schieben in die Prüfposition im Prüfstand 10 gebracht werden.

Fig. 2 zeigt beispielhaft und schematisch eine mögliche Ausführungsform eines erfindungsgemäßen Prüfstands 100 für einen Antriebsstrang eines Kraftfahrzeugs 20 sowie das zu prüfende Kraftfahrzeug 20. Wie zu sehen ist, umfasst der erfindungsgemäße Prüfstand 100 zwei Belastungsmotoren 110, die direkt an den Naben 21 (nicht dargestellt in Fig. 2) des Kraftfahrzeugs 20 angeordnet werden können. Dadurch ist der erfindungsgemäße Prüfstand 100 im Vergleich zu bekannten Prüfständen 10 wesentlich kompakter und kostengünstiger. Insbesondere ist keine aufwändige Ausrichtung von Belastungseinheiten 11 bzw. Belastungsmotoren 110 relativ zum Kraftfahrzeug 20 erforderlich. Weiterhin kann das Kraftfahrzeug 20 mittels der Abstellmodule 130 aus eigener Kraft an die erforderliche Prüfposition bewegt werden. Von besonderem Vorteil ist weiterhin, dass der erfindungsgemäße Prüfstand 100 durch seinen Aufbau keine raumgreifenden Rahmengestelle 15 benötigt.

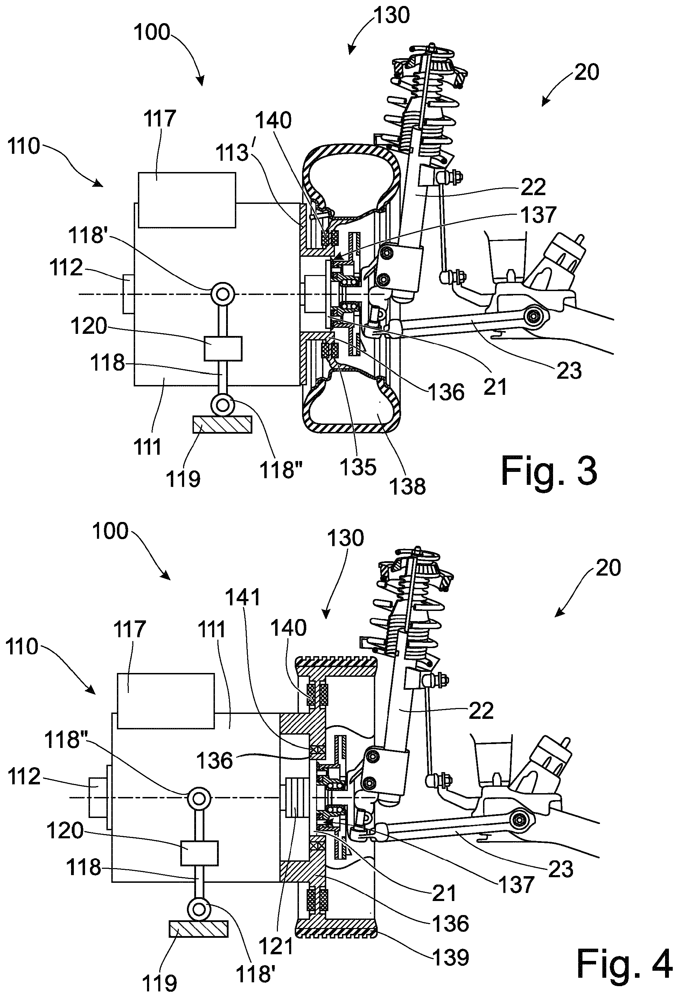

Fig. 3 zeigt beispielhaft und schematisch eine weitere mögliche Ausführungsform eines erfindungsgemäßen Prüfstands 100 im Detail. Zu sehen ist der als Elektromotor 110 ausgebildete Belastungsmotor 110, der ein Motorgehäuse 111 und eine Motorwelle 112 aufweist. Beim Elektromotor 110 handelt es sich beispielsgemäß um einen permanenterregten Synchro-Torque-Motor 110 mit flüssigkeitsgekühlter Motorwelle 112. Beispielsgemäß weist die Motorwelle 112 eine in Fig. 3 nicht dargestellte Drehdurchführung auf, in welche Glycol als Kühlmittel einleitbar ist. Durch ebenfalls nicht dargestellte Bohrungen in der Motorwelle 112 wird die Motorwelle 112 vom Glycol durchströmt und gekühlt. Der Synchro-Torque-motor 110 ist als Synchronmotor 110 ausgebildet und weist beispielsgemäß zwölf permanentmagnetische Polpaare auf. Die vergleichsweise große Anzahl an Polpaaren verleiht dem Belastungsmotor 110 auch bei Beaufschlagung mit vergleichsweise geringen Stromstärken bereits ein vergleichsweise sehr hohes Drehmoment. Diese Ausbildungsform führt weiterhin zu dem Vorteil, dass der Belastungsmotor 110 eine vergleichsweise große radiale Breite im Vergleich zur axialen Länge aufweist. Derartige Elektromotoren 110 sind auch als sog. "Torque-Motoren" bekannt. Ein Inverter 117 ist beispielsgemäß direkt am Motorgehäuse 111 angeordnet. Alternativ kann der Inverter 117 aber auch beabstandet vom Motorgehäuse 111 angeordnet sein.

Weiterhin zu sehen ist ein Abstellmodul 130. Der Belastungsmotor 110 ist dabei über eine zentrale Öffnung des Abstellmoduls 130 direkt mit der Nabe 21 des Kraftfahrzeugs 20 verbunden, beispielsgemäß über den Radflansch der Nabe 21. Da die Nabe 21 ein Endglied des Antriebsstrangs des Kraftfahrzeugs 20 ist, besteht somit auch eine Triebverbindung zum Antriebsstrang des Kraftfahrzeugs 20, so dass der Antriebsstrang über den Belastungsmotor 110 belastet und geprüft werden kann. Das Motorgehäuse 111 ist seinerseits drehfest mit dem radialen Mittelteil 136 Abstellmoduls 130 verbunden. Der Mittelteil 136 ist seinerseits über eine erste Lagerung 140 drehbar im radialen Außenteil 135 des Abstellmoduls 130 gehalten. Dadurch ist es einerseits möglich, das zu prüfende Kraftfahrzeug 20 über den drehbaren Außenteil 135 vergleichsweise einfach zu bewegen, beispielsweise zu verschieben, da der Mittelteil 136 nicht mitdreht. Andererseits ist es möglich, den Antriebsstrang zu prüfen, indem die Nabe 20 vom Belastungsmotor mit einem Drehmoment und einer Drehzahl beaufschlagt wird, ohne dass der Außenteil 135 mitdreht, d.h. also, dass das Kraftfahrzeug 20 während des Prüfvorgangs ortsfest bleibt.

Auf dem Abstellmodul 130 ist beispielsgemäß ein Luftreifen 138 angeordnet. Bei dem Luftreifen 138 handelt es sich beispielsgemäß um einen Luftreifen 138, der auch im Straßenbetrieb des Kraftfahrzeugs 20 zugelassen ist. Da das Kraftfahrzeug 20 während eines Prüfvorgangs auf dem Luftreifen 138 aufsteht, ergibt sich somit ein sehr realitätsnahes Prüfungsverhalten des Antriebsstrangs des Kraftfahrzeugs 20.

Am Motorgehäuse 111 ist seitlich zudem ein Drehmomentsensor 120 angeordnet, welcher sich im Kraftfluss einer den Drehmomentsensor umfassenden Strebe 118 befindet. Die Strebe 118 weist an jeden axialen Ende beispielsgemäß ein Gelenkauge 118', 118" auf, wobei das erste Gelenkauge 118' am Motorgehäuse befestigt ist und das zweite Gelenkauge 118" am Untergrund 119 befestigt ist. Der Untergrund 119 ist in diesem Fall als Bodenplatte 119 ausgebildet, welche eine Anbindung für das zweite Gelenkauge 118" aufweist. Somit erfasst der Drehmomentsensor 120 nicht nur das vom Belastungsmotor 110 erzeugte Drehmoment, sondern blockiert auch eine Drehbewegung des Motorgehäuses 111, indem es dieses am Untergrund rotatorisch abstützt. Je nach Drehrichtung des Belastungsmotors 110 wird der Drehmomentsensor 120 auf Zug oder auf Druck belastet.

Der Belastungsmotor 110, der Drehmomentsensor 120 und das Abstellmodul 130 stellen gemeinsam eine mögliche Ausbildungsform des erfindungsgemäßen Prüfstands 100 dar. Nur ausschnittweise zu sehen ist das Kraftfahrzeug 20, von welchem in Fig. 3 der besseren Übersichtlichkeit wegen nur eine Nabe 21, ein Schwingungsdämpfer 22 und eine Radanlenkung 23 zu sehen sind.

Fig. 4 zeigt beispielhaft und schematisch eine weitere mögliche Ausführungsform eines erfindungsgemäßen Prüfstands 100. Der Prüfstand 100 der Fig. 4 unterscheidet sich dabei vom Prüfstand 100 der Fig. 3 zunächst durch die Ausbildung des Abstellmoduls 130. Beispielsgemäß ist auf dem Abstellmodul 130 anstelle eines Luftreifens 138 eine Gummibeschichtung 139 angeordnet.

Ein weiterer Unterschied des Prüfstands 100 der Fig. 4 gegenüber dem Prüfstand der Fig. 3 besteht darin, anstelle einer zentralen Öffnung 137 ein zentraler Innenteil 137 vorgesehen ist, welcher über eine zweite Lagerung 141 gegenüber dem radialen Mittelteil 136, welcher den zentralen Innenteil 141 radial umgibt, drehbar ist. Weiterhin ist eine Ausgleichskupplung 121 vorgesehen, um Winkel- und Radialversätze auszugleichen.

Das Motorgehäuse 111 ist an seinem dem Abstellmodul zugewandten Axialende mit drehfest mit dem radialen Mittelteil 136 verbunden.

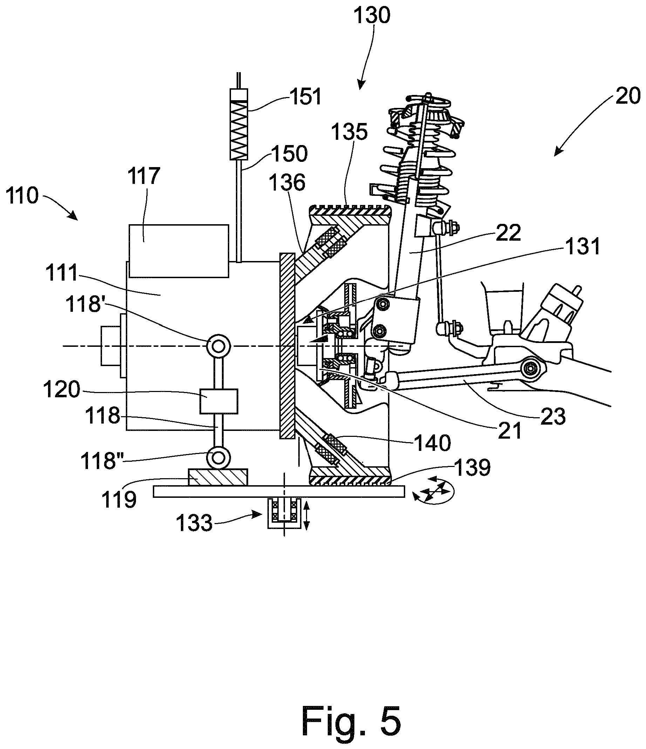

Fig. 5 zeigt beispielhaft und schematisch eine nochmals weitere mögliche Ausführungsform eines erfindungsgemäßen Prüfstands 100. Der Prüfstand 100 der Fig. 5 unterscheidet sich dabei vom Prüfstand 100 der Fig. 4 vor allem durch das Vorhandensein eines Abstützstempels 133, der in drei Raumrichtungen verstellbar und um eine Achse verdrehbar (jeweils durch Pfeile dargestellt) ist. Während des Prüfvorgangs können das Abstellmodul 130 und der Belastungsmotor 110 auf dem Abstützstempel 133 abgestützt werden. Durch eine entsprechende Betätigung des Abstützstempels 133 während des Prüfvorgangs lassen sich beispielsweise Bodenunebenheiten während einer Fahrt des Kraftfahrzeugs 20 simulieren. Ebenso lassen sich auch nahezu alle anderen Einflüsse eines möglichen Untergrunds simulieren, insbesondere auch in Verbindung mit Lenkbewegungen von lenkbaren Rädern des Kraftfahrzeugs 20. Weiterhin unterscheidet sich der Prüfstand 100 der Fig. 5 durch das Vorhandensein einer Motorstütze 150, welche beispielsgemäß von oben an das Motorgehäuse 111 angreift und ein Kippmoment des Belastungsmotors 110, welches andernfalls am Abstellmodul 130 abgestützt werden müsste, aufnimmt. Beispielsgemäß handelt es sich bei der Motorstütze 150 um ein Drahtseil 150, welches oberhalb des Prüfstands 100 an einer geeigneten Konstruktion befestigt ist. Beispielsgemäß umfasst die Motorstütze 150 weiterhin ein Kompensationselement 151, welches eine vorspannbare Feder enthält und über eine eingestellte Vorspannung der Feder genau das Kippmoment des Belastungsmotors 110 abstützt.

### Bezugszeichen

- 10: Prüfstand
- 11: Belastungseinheit
- 12: Verbindungswelle
- 13: Antriebsmotor
- 14: Klemmenkasten
- 15: Rahmengestell
- 16: Abstützelement
- 20: Kraftfahrzeug
- 21: Nabe
- 22: Schwingungsdämpfer
- 23: Radanlenkung
- 100: Prüfstand
- 110: Belastungsmotor, Elektromotor, permanenterregter Synchronmotor
- 111: Motorgehäuse
- 112: Motorwelle
- 117: Inverter
- 118: Strebe
- 118': erstes Gelenkauge
- 118": zweites Gelenkauge
- 119: Untergrund, Bodenplatte, Haltevorrichtung
- 120: Drehmomentsensor
- 121: Ausgleichskupplung
- 130: Abstellmodul
- 132: Blockiervorrichtung
- 133: Abstützstempel
- 135: radialer Außenteil
- 136: radialer Mittelteil
- 137: zentraler Innenteil, zentrale Öffnung
- 138: Luftreifen
- 139: Gummibeschichtung
- 140: erste Lagerung
- 141: zweite Lagerung
- 150: Motorstütze, Drahtseil
- 151: Kompensationselement

## Patentansprüche

1. Prüfstand (100) für einen Antriebsstrang eines Kraftfahrzeugs (20), umfassend mindestens einen Belastungsmotor (110) mit einem Motorgehäuse (111) und einer Motorwelle (112), mindestens einen Drehmomentsensor (120) und mindestens ein Abstellmodul (130), wobei die Motorwelle (112) dazu ausgebildet ist, trieblich mit einer Nabe (21) des Kraftfahrzeugs (20) verbunden zu werden und wobei der Drehmomentsensor (120) dazu ausgebildet ist, ein vom Belastungsmotor (110) erzeugtes Drehmoment zu erfassen,
**dadurch gekennzeichnet, dass** der mindestens eine Drehmomentsensor (120) derart am Motorgehäuse (111) angeordnet ist, dass er eine Drehbewegung des Motorgehäuses (111) gegenüber einem Untergrund (119) rotatorisch blockiert und das Drehmoment über das Motorgehäuse (111) am Untergrund (119) abstützt und
dass der mindestens eine Drehmomentsensor (120) in einer Strebe (118) angeordnet ist, wobei die Strebe über ein erstes Gelenkauge (118') am Motorgehäuse (111) befestigt ist und über ein zweites Gelenkauge (118") am Untergrund befestigt ist.

2. Prüfstand (100) nach Anspruch 1,
**dadurch gekennzeichnet, dass** an zwei lateralen Seiten des Motorgehäuses (111) jeweils ein Drehmomentsensor (120) angeordnet ist.

3. Prüfstand (100) nach mindestens einem der Ansprüche 1 und 2,
**dadurch gekennzeichnet, dass** das mindestens eine Abstellmodul (130) einen radialen Außenteil (135) und einen radialen Mittelteil (136) aufweist,
wobei der Mittelteil (136) drehbar im Außenteil (135) gehalten ist und
wobei der Mittelteil (136) dazu ausgebildet ist, drehfest mit einem axialen Ende des Motorgehäuses (111) verbunden zu werden.

4. Prüfstand (100) nach Anspruch 3,
**dadurch gekennzeichnet, dass** ein Verdrehen des Mittelteils (136) gegen den Außenteil (135) blockierbar ist.

5. Prüfstand (100) nach mindestens einem der Ansprüche 1 bis 4,
**dadurch gekennzeichnet, dass** die Motorwelle (112) drehfest mit einer Nabe (21) des Kraftfahrzeugs (20) verbindbar ist.

6. Prüfstand (100) nach mindestens einem der Ansprüche 1 bis 5,
**dadurch gekennzeichnet, dass** der Prüfstand (100) weiterhin einen Luftreifen (138) umfasst, welcher auf einem radialen Außenumfang des mindestens einen Abstellmoduls (130) angeordnet ist.

7. Prüfstand (100) nach mindestens einem der Ansprüche 1 bis 5,
**dadurch gekennzeichnet, dass** der Prüfstand (100) weiterhin eine Gummibeschichtung (139) umfasst, welche auf einem radialen Außenumfang des mindestens einen Abstellmoduls (130)) angeordnet ist.

8. Prüfstand (100) nach Anspruch 1 bis 7,
**dadurch gekennzeichnet, dass** das mindestens eine Abstellmodul (130) kraftschlüssig oder formschlüssig mit dem Untergrund verbindbar ist.

9. Prüfstand (100) nach Anspruch 1 bis 8,
**dadurch gekennzeichnet, dass** der mindestens eine Belastungsmotor (110) als permanenterregter Synchronmotor (110) ausgebildet ist.

10. Prüfstand (100) nach mindestens einem der Ansprüche 1 bis 9,
**dadurch gekennzeichnet, dass** der Prüfstand (100) weiterhin mindestens einen Abstützstempel (133) umfasst, wobei der Abstützstempel (133) in drei Raumrichtungen verstellbar und/oder um eine Achse verdrehbar ist und wobei der Abstützstempel (133) dazu ausgebildet ist, das Abstellmodul (130) abzustützen und den Untergrund (119) darstellt.

11. Prüfstand (100) nach mindestens einem der Ansprüche 1 bis 10,
**dadurch gekennzeichnet, dass** der Prüfstand (100) für jedes antreibbare Rad des Kraftfahrzeugs (20) jeweils einen Belastungsmotor (110), jeweils einen Drehmomentsensor (120) und jeweils ein Abstellmodul (130) umfasst.

## Claims

1. Test stand (100) for a drive train of a motor vehicle (20), comprising at least one load motor (110) with a motor housing (111) and a motor shaft (112), at least one torque sensor (120) and at least one parking module (130), the motor shaft (112) being designed to be drivingly connected to a hub (21) of the motor vehicle (20), and the torque sensor (120) being designed to detect a torque generated by the load motor (110),
**characterized in that** the at least one torque sensor (120) is arranged on the motor housing (111) in such a way that it rotationally blocks a rotational movement of the motor housing (111) relative to a base (119) and supports the torque via the motor housing (111) on the base (119) and
**in that** the at least one torque sensor (120) is arranged in a strut (118), the strut being attached to the motor housing (111) via a first joint eye (118') and being attached to the base via a second joint eye (118").

2. Test stand (100) according to Claim 1,
**characterized in that** a respective torque sensor (120) is arranged on two lateral sides of the motor housing (111).

3. Test stand (100) according to at least one of Claims 1 and 2,
**characterized in that** the at least one parking module (130) has a radial outer part (135) and a radial middle part (136),
the middle part (136) being held rotatably in the outer part (135) and
the middle part (136) being designed to be connected to an axial end of the motor housing (111) for conjoint rotation.

4. Test stand (100) according to Claim 3,
**characterized in that** rotation of the middle part (136) relative to the outer part (135) can be blocked.

5. Test stand (100) according to at least one of Claims 1 to 4,
**characterized in that** the motor shaft (112) can be connected to a hub (21) of the motor vehicle (20) for conjoint rotation.

6. Test stand (100) according to at least one of Claims 1 to 5,
**characterized in that** the test stand (100) further comprises a pneumatic tyre (138), which is arranged on a radial outer circumference of the at least one parking module (130).

7. Test stand (100) according to at least one of Claims 1 to 5,
**characterized in that** the test stand (100) further comprises a rubber coating (139), which is arranged on a radial outer circumference of the at least one parking module (130).

8. Test stand (100) according to Claims 1 to 7,
**characterized in that** the at least one parking module (130) can be connected to the base in a force-fitting or form-fitting manner.

9. Test stand (100) according to Claims 1 to 8,
**characterized in that** the at least one load motor (110) is designed as a permanently excited synchronous motor (110).

10. Test stand (100) according to at least one of Claims 1 to 9,
**characterized in that** the test stand (100) further comprises at least one support jack (133), the support jack (133) being adjustable in three spatial directions and/or rotatable about an axis and the support jack (133) being designed to support the parking module (130) and forming the base (119).

11. Test stand (100) according to at least one of Claims 1 to 10,
**characterized in that** the test stand (100) comprises a respective load motor (110), a respective torque sensor (120) and a respective parking module (130) for each drivable wheel of the motor vehicle (20).

## Revendications

1. Banc d'essai (100) pour une chaîne cinématique d'un véhicule automobile (20), comprenant au moins un moteur de charge (110) avec un boîtier de moteur (111) et un arbre de moteur (112), au moins un capteur de couple de rotation (120) et au moins un module d'arrêt (130), l'arbre de moteur (112) étant conçu pour être relié de manière entraînante à un moyeu (21) du véhicule automobile (20) et le capteur de couple de rotation (120) étant conçu pour détecter un couple de rotation généré par le moteur de charge (110),
**caractérisé en ce que** l'au moins un capteur de couple de rotation (120) est disposé sur le boîtier de moteur (111) de telle manière qu'il bloque en rotation un mouvement de rotation du boîtier de moteur (111) par rapport à un support (119) et soutien le couple de rotation par le boîtier de moteur (111) sur le support (119) et
que l'au moins un capteur de couple de rotation (120) est disposé dans une entretoise (118), l'entretoise étant fixée sur le boîtier de moteur (111) par un premier œillet d'articulation (118') et étant fixée sur le support par un deuxième œillet d'articulation (118").

2. Banc d'essai (100) selon la revendication 1,
**caractérisé en ce qu'**un capteur de couple de rotation (120) est disposé sur deux côtés latéraux du boîtier de moteur (111).

3. Banc d'essai (100) selon au moins l'une des revendications 1 et 2,
**caractérisé en ce que** l'au moins un module d'arrêt (130) comprend une partie radiale externe (135) et une partie radiale centrale 136),
la partie centrale (136) étant maintenue de manière rotative dans la partie externe (135) et
la partie centrale (136) étant conçue pour être reliée de manière solidaire en rotation à une extrémité axiale du boîtier de moteur (111).

4. Banc d'essai (100) selon la revendication 3,
**caractérisé en ce qu'**une rotation de la partie centrale (136) par rapport à la partie externe (135) peut être bloquée.

5. Banc d'essai (100) selon au moins l'une des revendications 1 à 4,
**caractérisé en ce que** l'arbre de moteur (112) peut être relié de manière solidaire en rotation à un moyeu (21) du véhicule automobile (20).

6. Banc d'essai (100) selon au moins l'une des revendications 1 à 5,
**caractérisé en ce que** le banc d'essai (100) comprend en outre un pneumatique (138) qui est disposé sur une périphérie extérieure radiale de l'au moins un module d'arrêt (130).

7. Banc d'essai (100) selon au moins l'une des revendications 1 à 5,
**caractérisé en ce que** le banc d'essai (100) comprend en outre un revêtement en caoutchouc (139) qui est disposé sur une périphérie extérieure radiale de l'au moins un module d'arrêt (130).

8. Banc d'essai (100) selon les revendications 1 à 7,
**caractérisé en ce que** l'au moins un module d'arrêt (130) peut être relié au support par complémentarité de force ou par complémentarité de forme.

9. Banc d'essai (100) selon les revendications 1 à 8,
**caractérisé en ce que** l'au moins un moteur de charge (110) est conçu sous la forme d'un moteur synchrone à excitation permanente (110).

10. Banc d'essai (100) selon au moins l'une des revendications 1 à 9,
**caractérisé en ce que** le banc d'essai (100) comprend en outre au moins un poussoir de support (133), le poussoir de support (133) étant réglable dans trois directions spatiales et/ou étant apte à tourner autour d'un axe, et le poussoir de support (133) étant conçu pour soutenir le module d'arrêt (130) et constituant le support (119).

11. Banc d'essai (100) selon au moins l'une des revendications 1 à 10,
**caractérisé en ce que** le banc d'essai (100) comprend pour chaque roue motrice du véhicule automobile (20) respectivement un moteur de charge (110), respectivement un capteur de couple de rotation (120) et respectivement un module d'arrêt (130).
